# EUROPEAN PATENT SPECIFICATION

(11) **EP 2 068 381 B1**
(45) Date of publication and mention of the grant of the patent: **12.10.2011**
(21) Application number: 08020585.9
(22) Date of filing: 26.11.2008
(51) Int. Cl.: H01M 2/10, H01M 10/50, H01M 2/18

(54) **Battery system**
Batteriesystem
Système de batteries

(30) Priority: 28.11.2007 JP 2007308091
(43) Date of publication of application: 10.06.2009
(73) Proprietor: Sanyo Electric Co., Ltd., Moriguchi-shi Osaka 570-8677 (JP)
(72) Inventor: Okada, Wataru, Moriguchi-shi Osaka 570-8677 (JP); Shimizu, Hideo, Moriguchi-shi Osaka 570-8677 (JP); Nakamura, Shinsuke, Moriguchi-shi Osaka 570-8677 (JP)
(74) Representative: Hertz, Oliver

(56) References cited:
- US-A- 5 585 204
- US-A1- 2002 028 375
- US-A1- 2002 102 454

## Description

### 1. Field of the Invention

The present invention relates to a battery system in which battery cells composed of a plurality of rectangular/prismatic cells are layered and interconnected, and gas is forcibly blown, for a cooling purpose, between the battery cells.

### 2. Description of the Related Art

Battery systems, in which a plurality of rectangular/prismatic cells are layered, have been developed as described in JP-2001-23702A and JP-H8-32129A (1996).
In the battery system disclosed in JP-2001-23702A, a multitude of rectangular/prismatic cells are layered to form a battery block, with a spacer being disposed between the cells in a manner of defining a cooling gap. A cooling medium such as air is blown through the cooling gap defined by the spacer. In this battery system, the multitude of layered rectangular/prismatic cells are cooled by a cooling medium such as air blown through the cooling gap. On the other hand, In the battery system disclosed in JP-H8-32129A (1996), a heat sink is disposed between the rectangular/prismatic cells to make up a battery block. In this battery system, a multitude of layered rectangular/prismatic cells are cooled via the heat sink.

The battery systems described in the above publications suffer a drawback that when the number of layered rectangular/prismatic cells increases, it becomes difficult to cool all the cells at a uniform temperature, that is, with a reduced difference in temperature. In the case of a battery system with a multitude of layered rectangular/prismatic cells, it is important to reduce a temperature difference among the rectangular/prismatic cells to minimum. This is because, when a temperature difference occurs to the cells, the residual capacities of the cells become uneven, and thus a cell's service life becomes shortened. Since charging and discharging efficiency of a cell varies in accordance with a temperature, such occurred temperature difference will cause the residual capacity to differ even when each cell is charged and discharged at the same level of current. When a difference occurs in the residual capacity, a cell with a larger amount of residual capacity is liable to be over-charged, while a cell with a smaller amount of residual capacity is liable to be over-discharged, with such a state causing the service life of the battery system to be shortened. Like in the case of a hybrid car, where a multitude of cells are layered to be used for charging and discharging the cells at a large amount of electric current, this kind of battery system involves a very high cost of manufacture, so that it is particularly important how to elongate the battery's service life. In particular, a battery system using a large number of cells involves a higher cost of manufacture, it is required to elongate the service life of the battery system. Notwithstanding, when a multitude of cells are layered, the battery system will characteristically encounter a larger temperature difference and accordingly will shorten the service life of battery system.
Further battery systems are disclosed in US 5 585 204, US 2002/0102454 A1 and US 2002/0028375 A1.

The present invention has been made in order to overcome the above-mentioned drawback inherent in the conventional battery system with layered rectangular/prismatic cells. It is the primary object of the present invention to provide a battery system with an ideal configuration. In particular, an important object of the present invention is to provide a battery system in which the cells are configured in a very simple array, while the battery's service life can be elongated due to a reduced difference in a battery temperature.

### SUMMARY OF THE INVENTION

In order to achieve the above-mentioned objects, the battery system of the present invention is provided according to claim 1.

The battery system of the present invention includes a battery block 3 in which battery cells 1 composed of a plurality of rectangular/prismatic cells are layered with a cooling gap 4 being defined between the battery cells 1 to allow a cooling gas to pass through, and a forced gas blower 9 for forcibly blowing the gas through the cooling gap 4 in the battery block 3 to cool the battery cells 1.

The battery block 3 is set in two separate arrays. Provided between the battery blocks 3 being set in two separate arrays is an intermediate duct 6 connected to each of the cooling gaps 4.

Further, an outer duct 7 is provided outside the battery block 3 being set in two separate arrays, and the plurality of cooling gaps 4 are connected in a parallel relationship between the outer duct 7 and the intermediate duct 6.

The battery system is so constructed and arranged that the forced gas blower 9 forcibly blows the cooling gas from the intermediate duct 6 to the outer duct 7, that the cooling gas is forcibly blown from the outer duct 7 to the intermediate duct 6, that the cooling gas being forcibly blown is branched from the intermediate duct 6 or from the outer duct 7 to be blown through each of the cooling gaps 4 to cool the battery cells 1, and that the cooling gas having passed through the cooling gaps 4 and cooled the battery cells 1 is collected at and exhausted from the outer duct 7 or the intermediate duct 6.

The above-described battery system carries the advantage that the multitude of battery cells are set in an ideal array, namely, the array is very simplified so that the reduced temperature difference in the cells can elongate the service life. For example, in the case of a battery system in which the rectangular/prismatic cells each composed of 36 pieces of lithium-ion cells are set in one array in a state of defining the cooling gap between the cells, when the cooling ducts are provided on opposite sides and the rectangular/prismatic cells are cooled by forcibly blowing the cooling gas at a prescribed velocity from one duct to another duct, the rectangular/prismatic cell has the minimum temperature of 26.7°C and the maximum temperature of 32.5°C, with the temperature difference being 5.8°C.

On the other hand, in the above-described battery system, when the 36 pieces of rectangular/prismatic cells are divided in two arrays to layer 18 pieces of rectangular/prismatic cells in one array and the gas is forcibly blown at the same velocity from the intermediate duct, the rectangular/prismatic cell has the minimum temperature of 27.3°C and the maximum temperature of 30.7°C, with the temperature difference being reduced to 3.4°C. As can be seen from this fact, in the battery system of the present invention, when the same number of rectangular/prismatic cells are used and the gas is forcibly blown by dividing the array into two to be branched from the intermediate duct to the opposite sides, the temperature difference can be remarkably reduced from 5.8°C to 3.4°C.

Further, the battery system of the present invention has an outer casing for covering the battery block so as to be provided with an outer duct between the outer casing and the battery block. Since the battery system is provided with the outer duct by using the outer casing, no extra parts dedicated for providing the outer duct are required, and the entirety can be made simplified and lighter in weight.

Further, in the battery system of the present invention, the outer casing has a ridge protruding outwardly along the outer duct, with the ridge broadening a width of the outer duct, and the outer casing can be reinforced with the ridge serving as a reinforcing rib, while a pressure loss is reduced in the outer duct due to the ridge of the outer casing.

Further, the battery system of the present invention, having the outer casing for covering the battery block, is provided with the intermediate duct between the outer casing and the battery block. Since this battery system as well is provided with the intermediate duct by using the outer casing, no extra parts dedicated to provide the intermediate duct are required, and the (entire) structure can be made simplified.

Further, in the battery system of the present invention, the outer casing has a ridge protruding outwardly along the portion of sealing the intermediate duct, with the ridge broadening a width of the intermediate duct, and the outer casing can be reinforced with the ridge serving as a reinforcing rib, while a pressure loss is reduced in the intermediate duct due to the ridge of the outer casing.

Further, in the battery system of the present invention, a sealing plate for sealing an opening superjacent to the intermediate duct is fixedly attached to a top surface of the battery block, and the intermediate duct can be provided between the two arrays of battery blocks, with a simplified structure.

Further, in the battery system of the present invention, an end face plate, having connection ducts connected respectively to the intermediate duct and the outer duct, is connected to the end face of the battery block, with the end face plate being so structured as to be connected to the battery block in an engagement structure, and the end face plate can be readily connected to the battery block.

Furthermore, in the battery system of the present invention, a harness storage connected to each of the battery cells is provided on the end face plate, and the harness can be stored in a fixed position by means of the end face plate.

In the battery system of the present invention, the cooling gas can be forcibly blown in a reverse direction to the intermediate duct 6 and the outer duct 7. Also in the battery system of the present invention, the cooling gas can be forcibly blown in the same direction to the intermediate duct 6 and the outer duct 7.

The above and further objects of the present invention as well as the features thereof will become more apparent from the following detailed description to be made in conjunction with the accompanying drawings.

### BRIEF DESCRIPTION OF THE DRAWINGS

Figure 1 is a top plan view showing an interior structure of the battery system in accordance with a first embodiment of the present invention;
Figure 2 is a perspective view of the battery system shown in Figure 1;
Figure 3 is a schematic horizontal cross-section view of the battery system shown in Figure 1;
Figure 4 is a vertical cross-section view of the battery system in accordance with a first embodiment of the present invention;
Figure 5 is a perspective view showing the state of connecting the outer casing to the end face plate;
Figure 6 is a perspective view showing the end portion of the battery system in accordance with a first embodiment of the present invention;
Figure 7 is a perspective view of the end face plate;
Figure 8 is a side view of the battery block in the battery system shown in Figure 2;
Figure 9 is a view showing the state of the end face plate being connected to the battery block shown in Figure 8;
Figure 10 is an exploded perspective view showing the structure in which the battery cell and the spacer are layered;
Figure 11 is an exploded perspective view showing another example of the spacer;
Figure 12 is a top plan view showing the interior structure of the battery system in accordance with a second embodiment of the present invention;
Figure 13 is a perspective view of the battery system shown in Figure 12:
Figure 14 is a schematic horizontal cross-section view of the battery system shown in Figure 12;
Figure 15 is a top plan view showing the interior structure of the battery system as a referential case;
Figure 16 is an exploded perspective view of the battery system shown in Figure 15; and
Figure 17 is a schematic vertical cross-section view of the battery system shown in Figure 15.

### DETAILED DESCRIPTION OF THE PREFERRED EMBODIMENT(S)

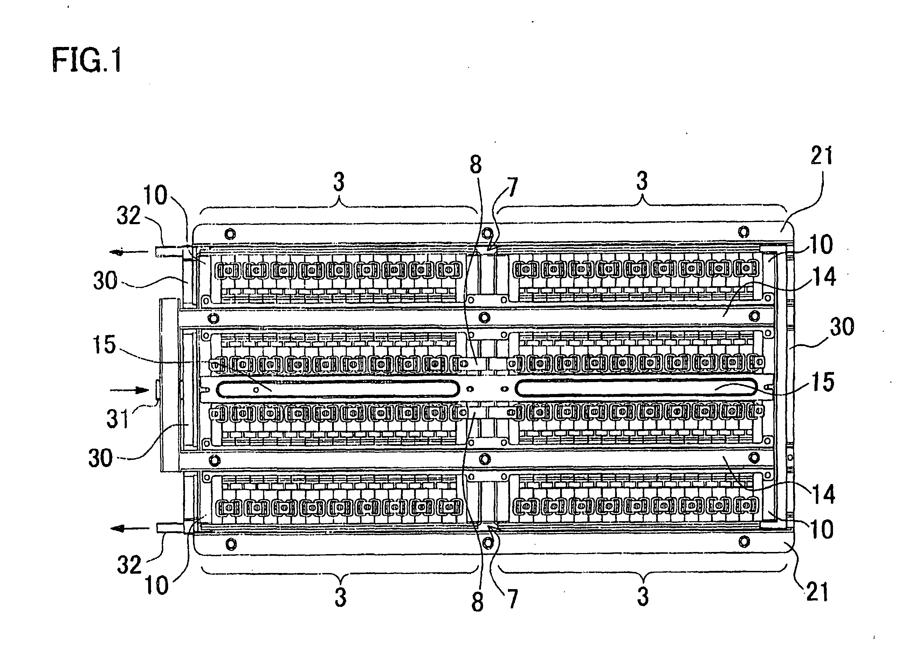

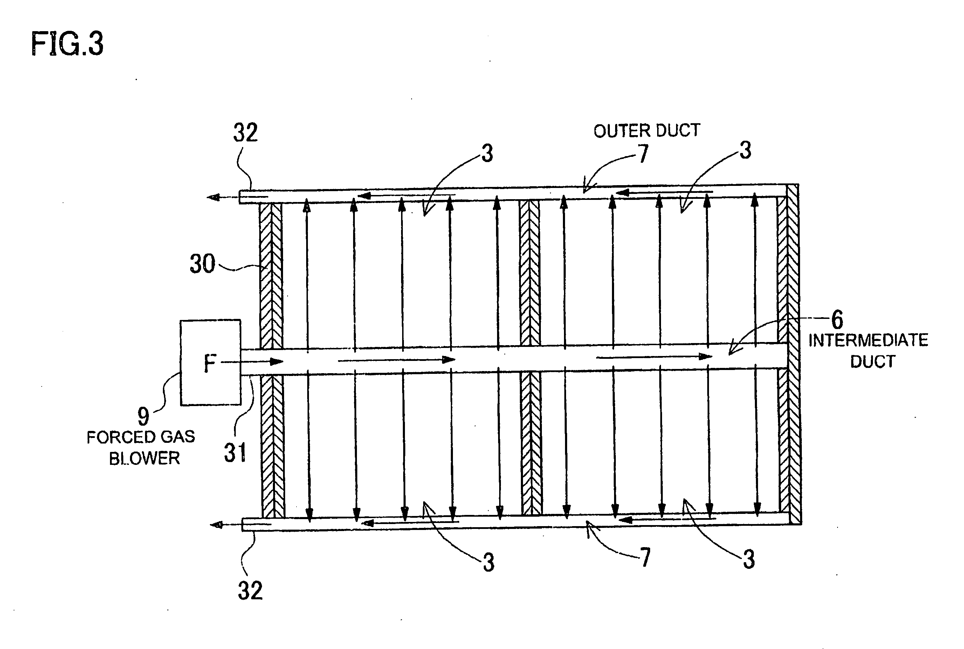

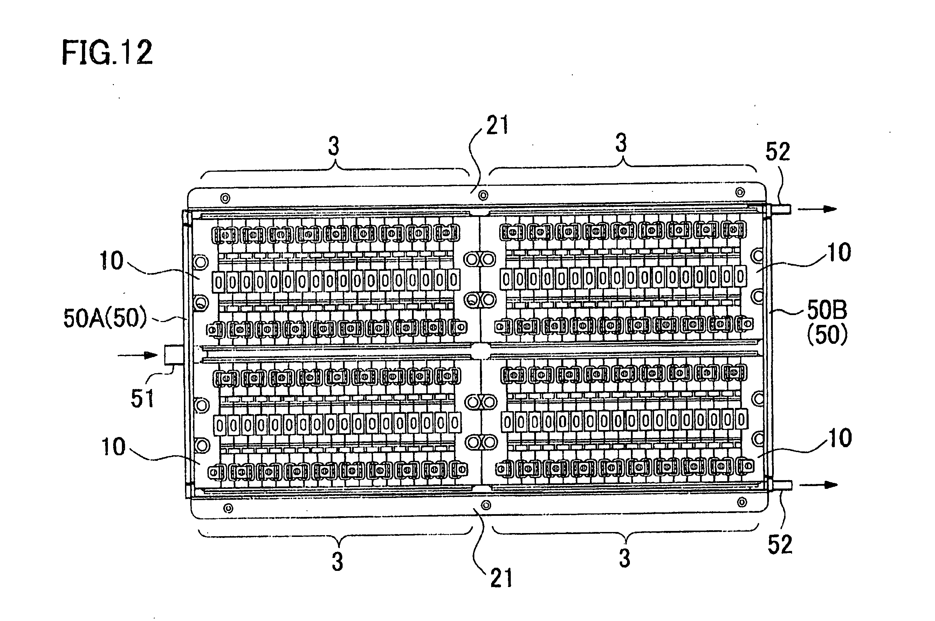

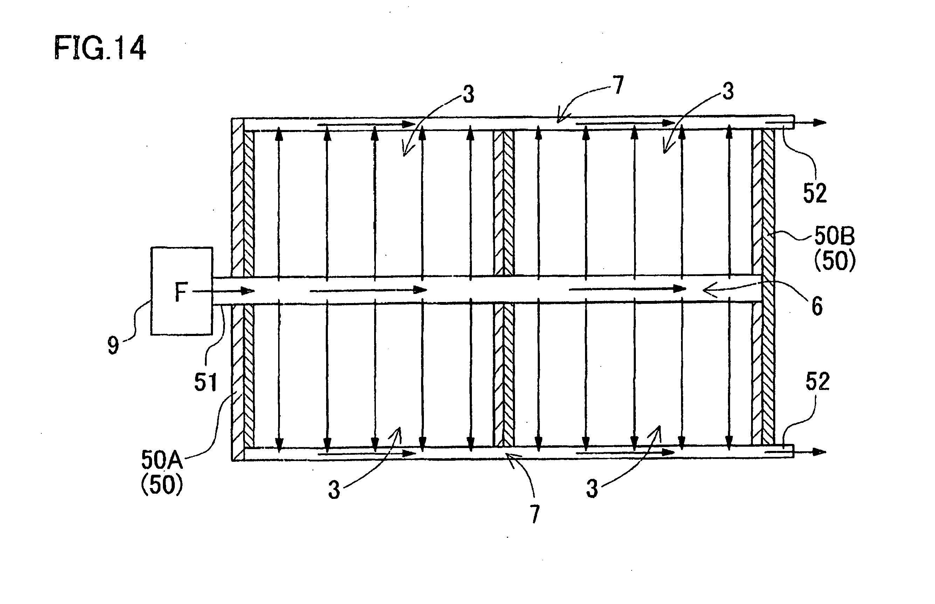

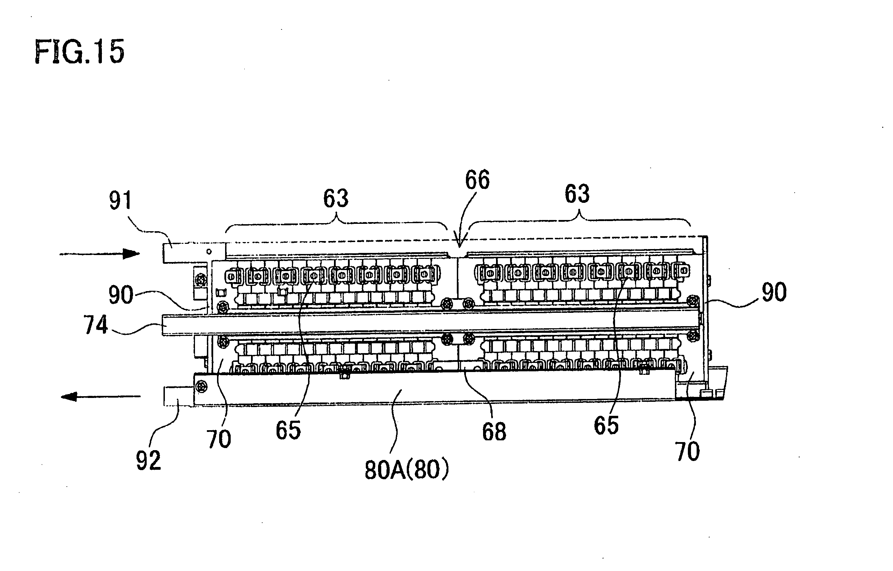

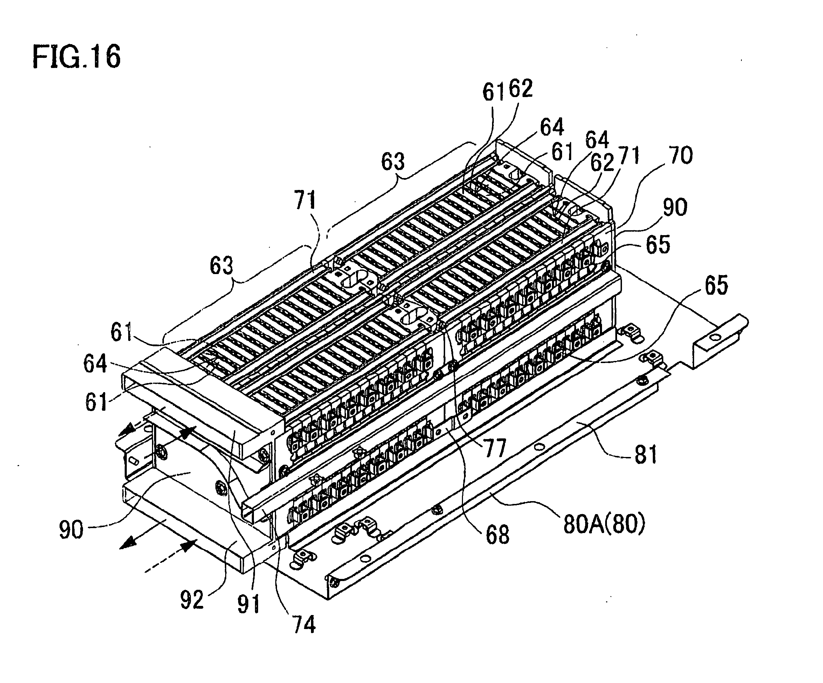

Figure 1 through Figure10 show (a battery system in accordance with) a first embodiment of the present invention; Figure12 through Figure 14 show (a battery system in accordance with) a second embodiment (of the present invention); and Figure 15 and Figure16 show a battery system as a referential case. The battery system shown in these embodiments are optimal as a power source to be primarily used with a hybrid car traveling by means of both of an engine and a motor, and with an electric vehicle such as an electric car traveling by means of a motor alone. It should be noted, however, that the battery system can also be used with a vehicle other than the hybrid car or the electric car, and can also be used for an application, other than the electric vehicle, where a large power output is required.

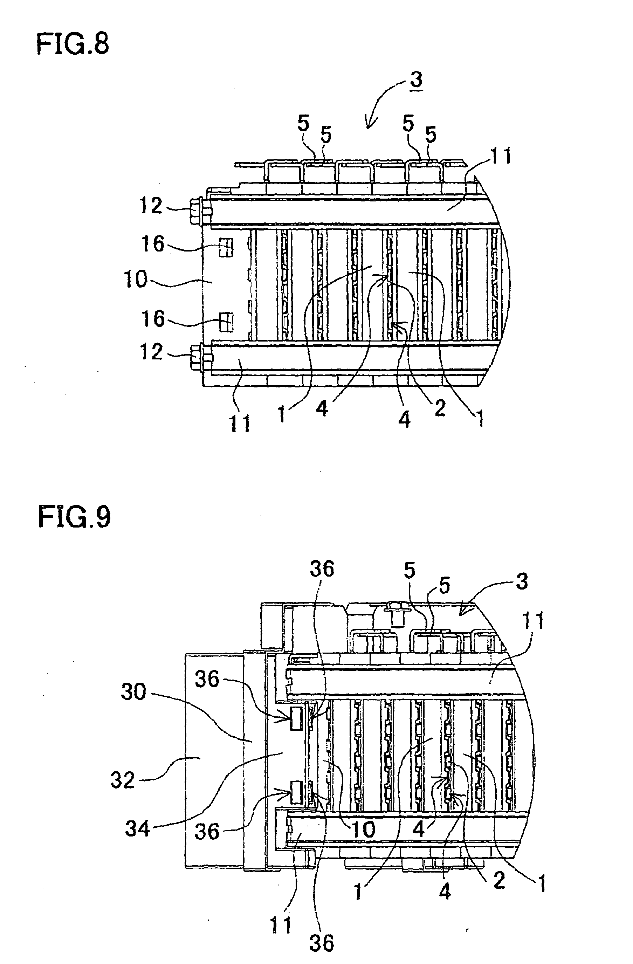

The battery system shown in the following embodiment includes: a battery block 3 in which the battery cells 1, composed of a plurality of rectangular/prismatic cells, are layered in a state where a cooling gap 4 is defined; and a forced gas blower 9 for cooling by forcibly blowing the cooling gas to the battery cells 1 in the battery block 3. The battery block 3 is provided with a spacer 2 between the layered battery cells 1. As shown in Figure 8 through Figure 10, the spacer 2 is of a shape allowing the cooling gap 4 to defined with respect to the battery cells 1. Further, the illustrated spacer is so designed that the battery cells 1 are connected, in a fit-in structure, to the opposite faces of the spacer. Through the spacer 2 connected in such fit-in structure to the battery cells 1, the adjacent battery cells 1 are layered without causing a displacement.

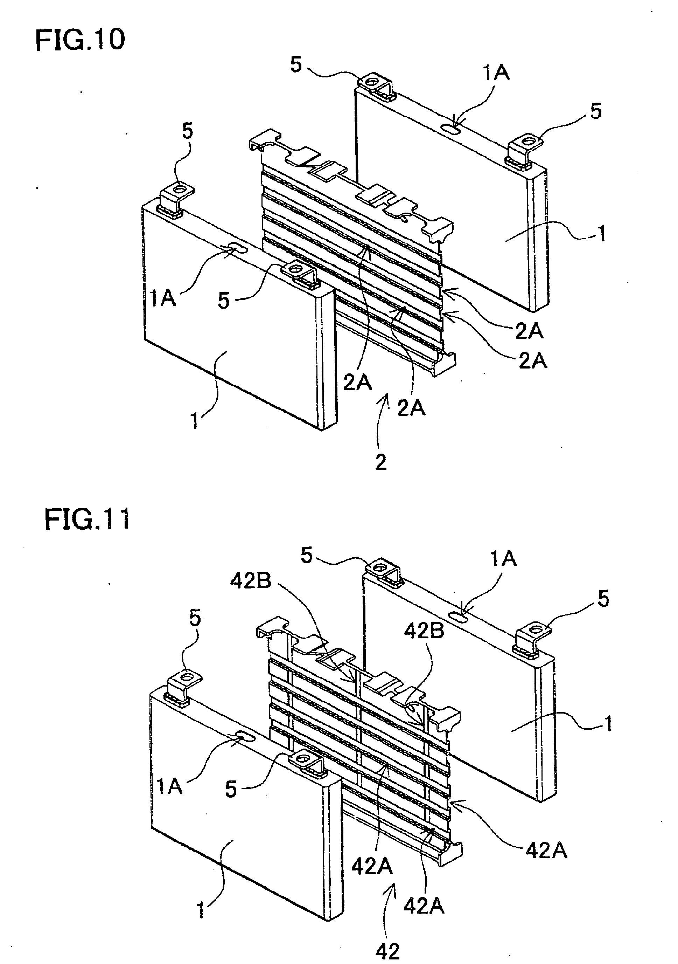

The battery cell 1 composed of the rectangular/prismatic cells is a lithium-ion secondary cell. However, the battery cell can also be other kind of secondary cell such as a nickel hydrogen cell and a nickel cadmium cell. The illustrated battery cell 1 is of a square shape having a prescribed thickness, with positive and negative electrode terminals 5 being protrudently provided on opposite ends on the top surface, and there is provided an opening 1A of a safety valve in the center portion of the top surface. Further, in the battery cell 1 as shown in Figure 10, the positive and negative electrode terminals 5 are bent in a reverse direction with respect to each other, while between the adjacent battery cells the positive and negative electrode terminals 5 are bent in a direction opposing to each other. In the illustrated battery system, the positive and negative electrode terminals 5 in the adjacent battery cells 1 are connected in a layered state to make an interconnection in series. Although not shown, the electrode terminals interconnected in a layered state are connected by a connector such as a bolt and nut. However, the battery cells can also be interconnected in series by being connected to a bus-bar. The battery system in which the adjacent battery cells are interconnected in series can increase an output voltage to gain large power. However, the battery system can also be so constructed and arranged as to connect the adjacent battery sells in parallel.

The battery cell 1 has its outer container made of an insulating material such as plastics. In the battery cell 1, since the outer container of the adjacent battery cells 1 can be prevented from a short circuit, the spacer 2 disposed between the battery cells 1 can also be made of a metal. However, the battery cell can also have the outer container made of a metal. The battery cells can be layered in an insulated state through the spacer made of an insulating material such as plastics.

When the spacer 2 is made of a material having smaller thermal conductivity like of plastics, a thermorunaway in the adjacent battery cells 1 can be effectively prevented. In the case of the spacer 2 shown in Figure 8 through 10, in order to effectively cool the battery cells 1, the cooling gap 4, through which the cooling gas such as air is allowed to pass, is provided with respect to the battery cells 1. In the spacer 2 shown in Figure 10, the cooling gap 4 is defined with respect to the battery cell 1 by providing a groove 2A extending to the opposite edges on the surface facing the battery cell 1. In the illustrated spacer 2, a plurality of grooves 2A are provided in a parallel relationship with respect to each other at prescribed intervals. In the illustrated spacer 2, the groves 2A are provided on both surfaces, and the cooling gaps 4 are provided between the mutually adjacent battery cell 1 and the spacer 2. This structure carries the advantage that the battery cells 1 on both sides can be effectively cooled between the cooling gaps 4 defined on both sides of the spacer 2. It should be noted, however, that the spacer can have the groove on a single side alone so that the cooling gap can also be defined between the battery cell and the spacer. The illustrated cooling gap 4 is horizontally defined so as to be open to the right and left of the battery block 3. The air forcibly blown into the cooling gap 4 directly and effectively cools the outer container of the battery cell 1. This structure carries the advantage that the battery cells 1 can be efficiently cooled, with the themorunaway being effectively prevented in the battery cells 1.

Further, in the spacer as shown in Figure 11, an air suction groove 42B can also be defined so as to intersect plural arrays of grooves 42A defining the cooling gaps. In the illustrated spacer 42, the air suction grooves 42B extending vertically as viewed in the Figure are defined in three locations, i.e., at the center portion and on both sides. The air suction groove 42B connects the plural arrays of grooves 42A defined horizontally in a parallel relationship, while the top end is extended to the top surface of the spacer 42 and is opened outside the spacer 42. The spacer 42 thus structured carries the advantage that the temperature increase in the battery cell 1 can be restrained by exhausting the air in the cooling gap from the air suction grooves 42B to outside in a state where the cooling gas is not forcibly blown into the cooling gaps. The illustrated spacer 42 has the air suction groove 42B defined on both sides. However, the spacer can also have the air suction groove defined on a single side alone.

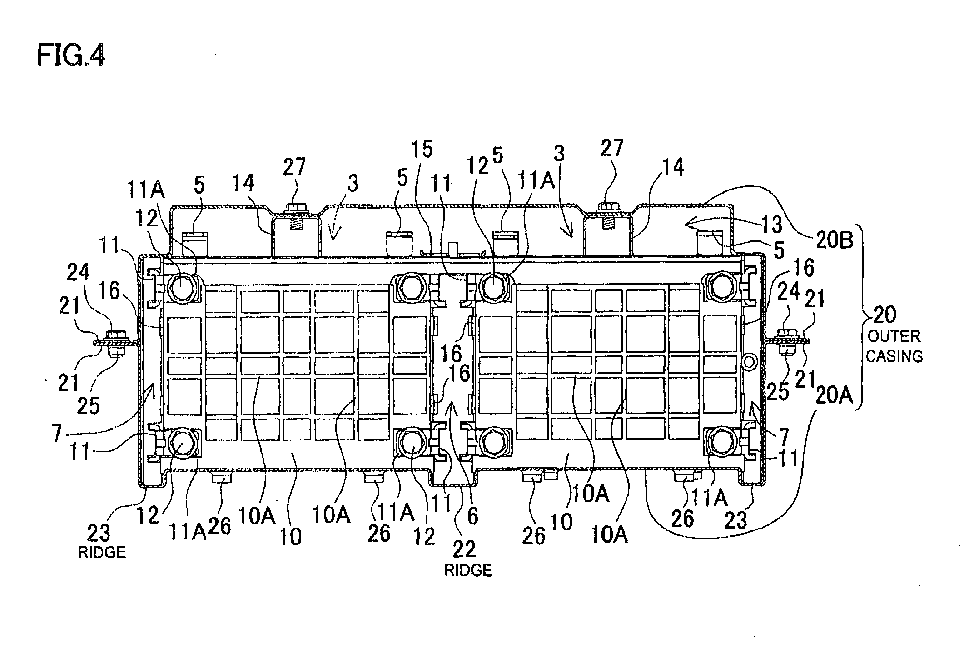

In the battery block 3, an end plate 10 is provided each on both sides, and such pair of end plates are interconnected by means of a connection member 11 to fix the layered battery cells 1. The end plate 10 is of a square shape having substantially the same contour as the contour of the battery cell 1. The connection member 11, as shown in Figure 4 and Figure 8, has both of its ends bent inwardly to fix a bent piece 11A to the end plate 10 by means of a set screw 12.

The end plate 10 shown in Figure 4 is reinforced with a reinforcing rib 10A integrally formed outwardly Further, provided on the outward surface of the end plate 10 is a connection hole (not shown) for connecting a bent piece 11A of the connection member 11. The end plate 10 shown in Figure 4 has four pieces of connection holes defined at four corners each on both sides. The connection hole is an internally threaded hole. The end plate 10 can fix the connection member 11 by screw-threading the set screw, extending through the connection member 11, into the internally threaded hole.

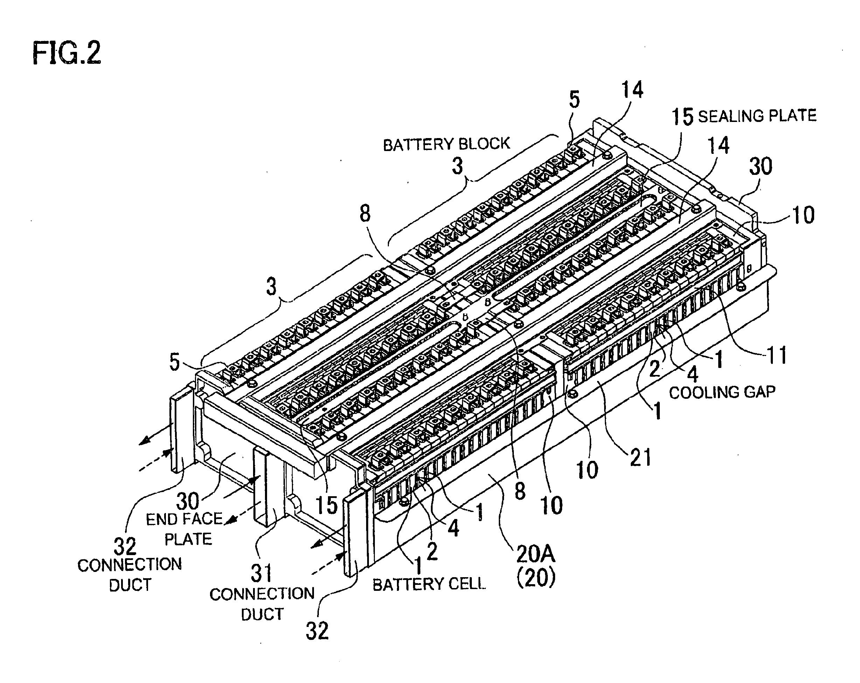

As shown in Figure 1 through Figure 4, the battery blocks 3 are set into two separate arrays, and an intermediate duct 6 connected to each of the cooling gaps 4 is provided between the two arrays of the battery blocks 3. Further, provided outside the battery blocks 3 separated into two arrays are outer ducts 7, and the plurality of cooling gaps 4 are connected in a parallel relationship between the outer duct 7 and the intermediate duct 6. In the battery system, the cooling gas is forcibly blown from the intermediate duct 6 to the outer ducts 7 as indicated by solid arrow in Figure 2, or alternatively the cooling gas is forcibly blown from the outer ducts 7 to the intermediate duct 6 as indicated by dotted arrow in Figure 2. The cooling gas forcibly blown from the intermediate duct 6 to the outer ducts 7 is branched from the intermediate duct 6 and is blown into each of the cooling gaps 4 to cool the battery cells 1. The cooling gas having cooled the battery cells 1 is collected at and exhausted from the outer ducts 7. On the other hand, the cooling gas forcibly blown from the outer ducts 7 into the intermediate duct 6 is branched from the outer ducts 7 and is forcibly blown into each of the cooling gaps 4 to cool the battery cells 1. The cooling gas having cooled the battery cells 1 after passing through the cooling gaps 4 is collected at and exhausted from the intermediate duct 6 to outside.

A cross section of the intermediate duct 6 is set to be two times a cross section of the outer duct 7. This is because the cooling gas forcibly blown into the intermediate duct 6 is branched into the two outer ducts 7, or alternatively the cooling gas forcibly blown from the two outer ducts 7 is collected at and exhausted from the intermediate duct 6. That is to say, since the intermediate duct 6 blows two times the amount of the cooling gas as compared with each of the outer ducts 7 at the both sides, the cross section is set to be two times in order to reduce a pressure loss. For an increased cross section in the battery system shown in Figure 4, the lateral width of the intermediate duct 6 is set to be two times the lateral width of the outer duct 7. It should be noted, however, that the intermediate duct may have a wider lateral width and vertical width to gain two times the cross section of the outer duct.

The battery system shown in Figure 1 through Figure 3 is composed of four battery blocks 3, with two battery blocks 3 being linearly interconnected to make up one array of battery block, and then such two arrays of battery blocks are set in a parallel relationship, with the intermediate duct 6 being provided in the middle portion and also with two outer ducts being respectively set at the outside. The two sets of battery blocks connected linearly are interconnected in a state of layering the end plates 10. Further, in the two sets of battery blocks linearly interconnected, the positive and negative electrode terminals 5 are interconnected in series by being connected to the bus-bar 8.

The battery blocks 3, being fixed to the outer casing 20, are set in two arrays. The battery system shown in the cross sectional view in Figure 4 has the outer casing 20 composed of a lower casing 20A and an upper casing 20B. The upper casing 20B and the lower casing 20A respectively have a flange 21 protruding outwardly, with the flanges 21 being fixed by using a bolt 24 and a nut 25. In the illustrated outer casing 20, the flanges 21 are disposed at the side of the battery block 3. However, the flange may also be disposed superjacent or subjacent to the battery block, or in its middle portion. In the outer casing 20, the end plate 10 is fixed to the lower casing 20A by means of a set screw 26 to fix the battery block 3. The set screw 26 is extended through the lower casing 20A and is screw-threaded into a threaded hole (not shown) of the end plate 10 to fix the battery block 3 to the outer casing 20. The set screw 26 has its head protruded out of the lower casing 20A.

Further, the outer casing 20 shown in Figure 4 has the battery block 3 fixed inside, and is provided with the outer ducts 7 and the intermediate duct 6 with respect to the battery block 3. Further, the outer casing 20 shown in this cross-sectional view is provided with a ridge 22 protruding outwardly along the portion sealing the intermediate duct 6 in the lower casing 20A. Further, the illustrated lower casing 20A is provided with ridges 23 protruding downwardly of the outer duct 7 provided at the both sides of the battery block 3. In these ridges 22, 23, the widths of the intermediate duct 6 and the outer duct 7 are made wider to reduce the pressure losses in the intermediate duct 6 and the outer ducts 7. Further, these ridges 22, 23 function to increase the bending strength of the lower casing 20A by reinforcing the lower casing 20A. In particular, since the illustrated lower casing 20A has the ridges 23 at both sides to increase the width of the outer duct 7 and also has the ridge 22 in the middle to increase the width of the intermediate duct 6, the bending strength can be remarkably increased by the total three arrays of ridges 23, 22, i.e., in the both sides and in the middle portion. Furthermore, the ridges 23, 22 provided in the both sides and in the middle portion in the lower casing 20A protrude downwardly as compared with the head of the set screw 26 for fixing the battery block 3, or alternatively are of the same height as that of the head. The outer casing 20, in a state where being mounted to the vehicles, etc., has the ridges 22, 23 mounted on a fixture plate to enable the weight load of the battery system to be supported in a wider area.

The upper casing 20B of the outer casing 20 has a space 13 defined with respect to an upper surface of the battery block 3. A harness (not shown) connecting the battery cell 1 is stored in the space 13. Also disposed in this space 13 is an exhaustion duct 14 connected to an opening 1A of a safety valve of the battery cell 1. Since the illustrated rectangular/prismatic cell has the opening 1A of the safety valve defined in the center portion of the upper surface, the battery blocks 3 on both sides are provided, in its center portion, with the exhaustion duct 14. The exhaustion duct 14 serves to exhaust to the outside the gas or electrolytic solution exhausted through the opened safety valve, and the upper casing 20B is fixed, with a set screw 27, on the exhaustion duct 14. In the battery system shown in Figure 4, three sides of the outer duct 7, that is, upper and lower sides and one lateral side, are sealed with the outer casing 20, and the lower portion of the intermediate duct 6 is sealed by the lower casing 20A. The upper portion of the intermediate duct 6 is not sealed by the outer casing 20. Therefore, in order to seal the upper portion of the intermediate duct 6, a sealing plate 15 is fixed on the upper surface of the battery block 3 set in two arrays. The sealing plate 15 is disposed between the two arrays of the battery blocks 3, and is fixed at a position of sealing the intermediate duct 6. In the intermediate duct 6, the upper portion is sealed with the sealing plate 15, the lower portion is sealed with the lower casing 20A, and both sides are sealed with the side face of the battery block 3 disposed adjacently. In the intermediate duct 6, however, since the cooling gas is branched to be blown through the battery cells 1, the battery blocks 3 disposed at the both sides of the intermediate duct 6 seals the both sides of the intermediate duct 6 but does not seal in such a way as to inhibit passage of the cooling gas.

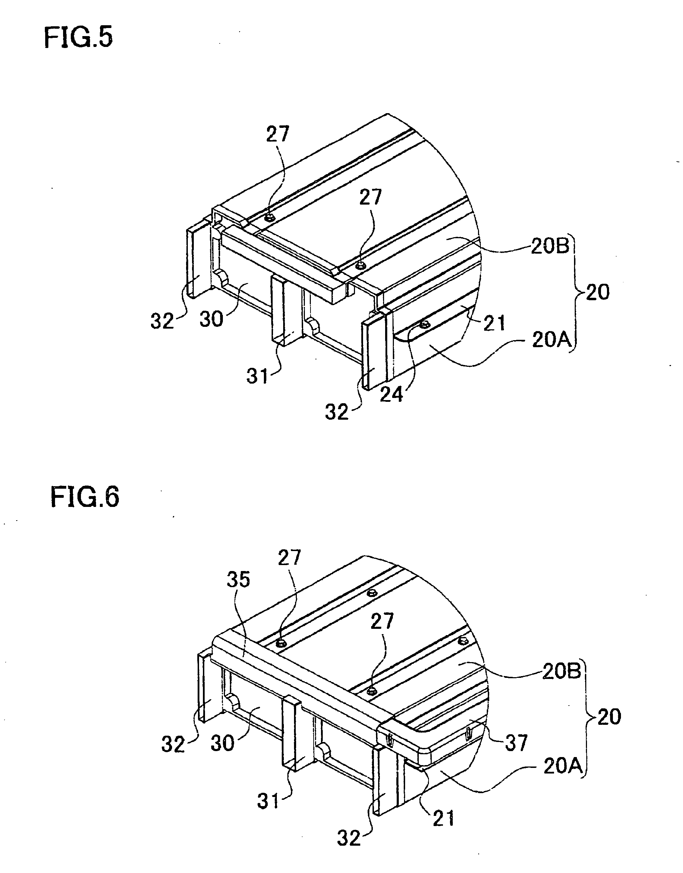

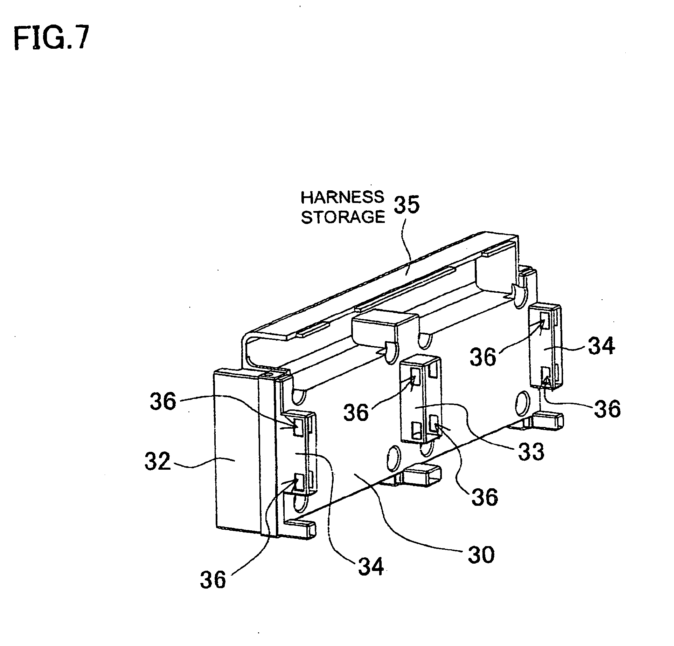

The battery block 3 is connected to an end face plate 30 of a shape as shown in Figure 5 through Figure 7. The end face plate 30 has connection ducts 31, 32 connected to the intermediate duct 6 and the outer ducts 7, respectively. The end face plate 30 is connected to the end plate 10 of the battery block 3 in an engagement structure as shown in Figure 7 through Figure 9. The engagement structure is composed of a claw 16 and an engagement hole 36 engaging the claw 16. The end plate 10 shown in Figure 4 and Figure 8 is provided with the claw 16 connecting the end face plate 30, the claw 16 protruding from the side face. On the other hand, the end face plate 30 has the engagement holes 36 defined respectively on a connection tube 34, inserted into the outer duct 7 provided between the side face of the end plate 10 and the inner surface of the outer casing 20, and on a connection tube 33, inserted between the end plates 10 disposed on the opposite sides of the intermediate duct 6. In the end face plate 30, the connection tubes 33, 34 are inserted into the intermediate duct 6 and the outer duct 7 respectively, with the claw 16 of the end plate 10 being guided into the engagement hole 36; and the end face plate 30 is connected to the battery block 3 so as not to be disconnected.

Further, the end face plate 30, when being connected to the battery block 3, is provided with the connection ducts 31, 32, respectively connected to the intermediate duct 6 and the outer ducts 7, in a manner of being integrally formed with plastics or other material and protruding outwardly. The connection ducts 31, 32 are connected to the forced gas blower 9, or alternatively are connected to an external exhaustion duct for exhausting the cooling gas from the battery system.

Further, the end face plate 30 shown in Figure 6 and Figure 7 is provided with a harness storage connected to each of the battery cells 1, that is, the hardness storage 35. The illustrated end face plate 30 is provided with the hardness storage 35 along the upper edge. A harness connected to each of the battery cells 1 is stored in the harness storage 35. Further, in the battery system shown in Figure 6, a harness storage tube 37 is fixed to the outer casing 20 so as to be connected to the hardness storage 35 of the end face plate 30. In the battery system, the harness is stored in the harness storage 35 of the end face plate 30 and (the hardness storage 35) is further placed into the hardness storage 37 for wiring.

In the battery system shown in Figure 1 through Figure 3, the battery cells 1 are cooled by forcibly blowing the cooling gas toward a reverse direction into the intermediate duct 6 and the outer ducts 7. However, in the battery system as shown in Figure 12 through Figure 14, the battery cells 1 may also be cooled by forcibly blowing the cooling gas toward the same direction into the intermediate duct 6 and the outer ducts 7.

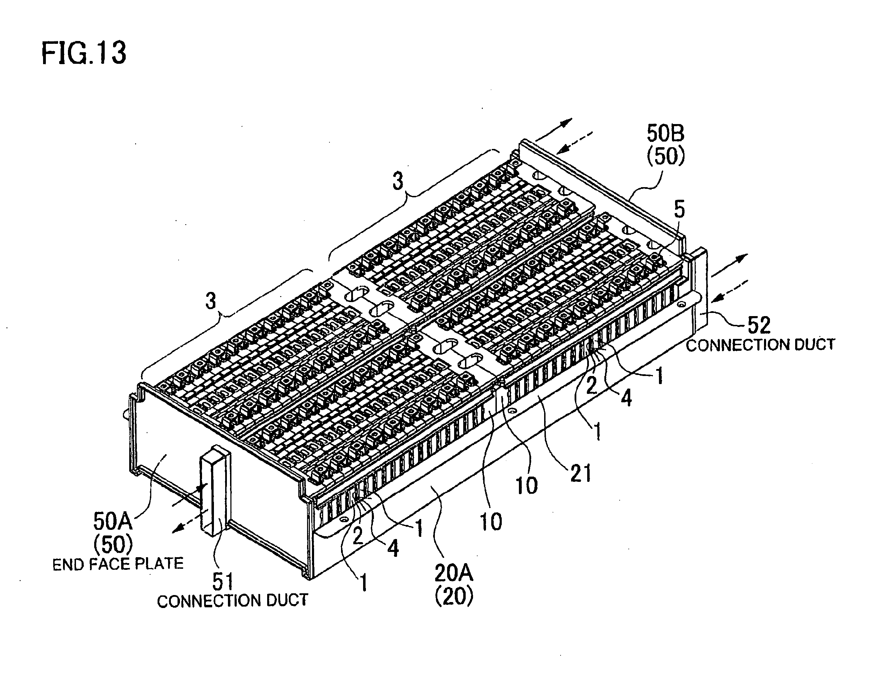

The battery system shown in Figure 12 through Figure 14 is provided with a pair of end face plates 50 disposed on opposite ends; one end face plate 50A is provided with a connection duct 51 connected to the intermediate duct 6, while another end face plate 50B is provided with a connection duct 52 connected respectively to the outer ducts 7. In this battery system as well, the cooling gas can be forcibly blown from the intermediate duct 6 to the outer ducts 7 as indicated by solid arrow in the Figure 12, or alternatively the cooling gas can be forcibly blown from the outer ducts to the intermediate duct as indicated by dotted arrow in Figure 13.
It should be added that, in Figure 12 through Figure 14, a detailed description shall be omitted regarding the same components as in the previous embodiment, with the components being suffixed with the same corresponding numerals.

Further, in the battery system shown in Figure 15 through Figure 17, a battery block 63 is made up such that battery cells 61 composed of a plurality of rectangular/prismatic cells are layered in a posture where the positive and negative output terminals 65 are positioned laterally in the right and left directions, that is, the battery cells 61 lie sideways, with narrow side faces of the exterior container being layered in a vertical position. The illustrated battery system is composed of four battery blocks 63, two of which being linearly connected to make up one array of battery block, and then these battery blocks are set into two separate arrays in a parallel relationship. The battery blocks 63 set in two arrays are disposed in a posture where bottom surfaces of the battery cells 61 are opposing to each other, that is, the surfaces provided with the positive and negative output terminals 65 are positioned reversely in the right and directions. Further, disposed between the two arrays of battery blocks 63 is an insulating plate 77, which functions to electrically isolate the opposing battery cells 61 with respect to each other. The two battery blocks 63 linearly connected have the positive and negative electrode terminals 65 connected via a bus-bar 68 to be interconnected in series.

In this battery block 63 as well, as shown in Figure 16, a plurality of battery cells 61 between which a spacer 62 is respectively disposed are layered, and a cooling gap 64 is defined between the adjacent battery cells 61. In the illustrated battery block 63, the spacers 62 are layered in a specified direction of the groove, such that the cooling gap 64 defined between the battery cells 61 is set in a vertical direction. That is to say, in this battery block 63, the cooling gap 64 defined between the battery cells 61 is opened at both of vertical surfaces of the battery block 63. Further, the battery block 63 is provided with end plates 70 at both ends, with the pair of end plates 70 being interconnected via a connection member 71, to fix the layered battery cells 61.

Further, as shown in Figure 15 through Figure 17, the battery system is provided with an upper duct 66 on the upper side of the battery block 63 and a lower duct 67 on the lower side of the battery block 63; the plurality of cooling gaps 64 are interconnected in a parallel relationship between the upper duct 66 and the lower duct 67.

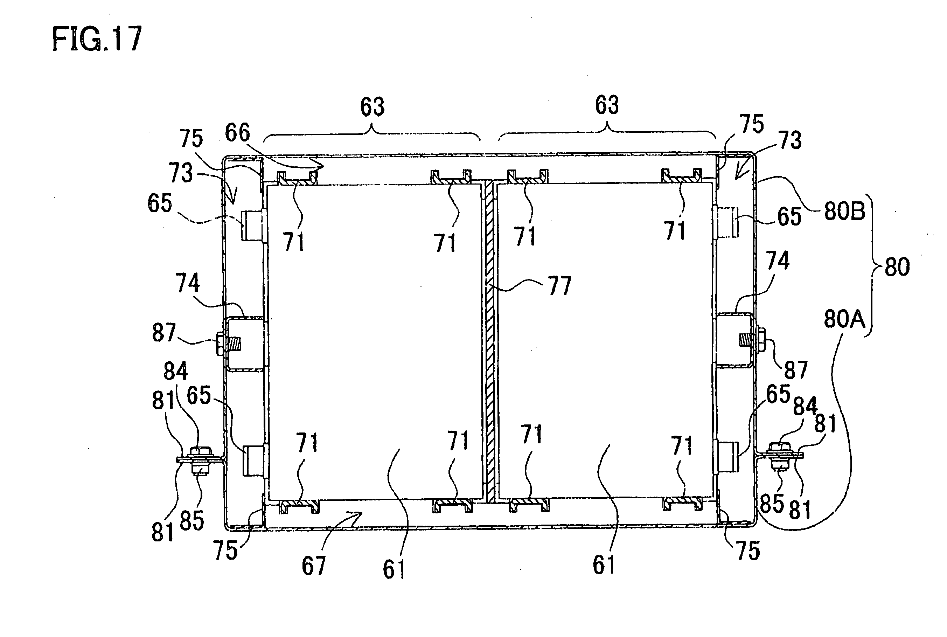

The battery block 63 is fixed to an outer casing 80 and disposed in a prescribed position. In the battery system shown in the cross-sectional view in Figure 17, the outer casing 80 is constituted with a lower casing 80A and an upper casing 80B. In the upper casing 80B and the lower casing 80A, a flange 81 protruding outwardly is fastened with a bolt 84 and a nut 85. Further, the illustrated outer casing 80 is provided with the upper duct 66 and the lower duct 67 between the two arrays of battery blocks 63 disposed inside. In the upper duct 66, the top surface is sealed with the upper casing 80B, the side faces at opposite sides are sealed with a sealing plate 75, and the bottom surface is sealed with the top surface of the battery block 63. Further, in the lower duct 67, the bottom surface is sealed with the lower casing 80A, the side faces at opposite sides are sealed with the sealing plate 75, and the top surface is sealed with the bottom surface of the battery block 63. However, since the upper duct 66 and the lower duct 67 are so designed as to branch the cooling gas to be blown between the battery cells 61, the top and bottom surfaces of the battery block 63 seal the upper duct 66 and the lower duct 67 but do not seal them in a manner of blocking passage of the cooling gas. The above-described outer casing 80 can be mounted on a wider area on a fixture plate of vehicles, with the bottom surface of the lower casing 80A being made planar.

Further, the outer casing 80 has a space 73 defined between the side faces (the right and left faces when viewed in the Figure) of the battery block 63. That is, as shown in Figure 17, the outer casing 80 has the space 73 defined at the opposite sides of the two arrays of battery blocks 63 being stored. A harness (not shown) connecting the battery cells 61 is stored in these spaces 73. Further, disposed in this space 73 is an exhaustion duct 74 connected to the opening of the safety valve in the battery cell 61. Since the illustrated rectangular/prismatic cell has the opening of the safety valve defined in the center portion of the side faces, the battery block 63 is provided with the exhaustion duct 74 at the center portion of the side face. The exhaustion duct 74 is meant for exhausting the gas or the electrolytic solution which is exhausted outside from the opened safety valve, and the side face of the exhaustion duct 74 is fixed to the outer casing 80 by using a set screw 87.

Further, the battery block 63 is sealed by an end face plate 90 connected at each of opposite ends. One end face plate 90 is provided with a connection duct 91 connected to the upper duct 66 and a connection duct 92 connected to the lower duct 67. These connection ducts 91, 92 are connected to the forced gas blower (not shown), or alternatively are connected to an external exhaustion duct for exhausting the cooling gas from the battery system.

In this battery system, as indicated by solid arrow in Figure 15 and Figure 16, the cooling gas is forcibly blown from the upper duct 66 to the lower duct 67, or alternatively, as indicated by dotted arrow in Figure 16, the cooling gas is forcibly blown from the lower duct 67 to the upper duct 66. The cooling gas forcibly blown from the upper duct 66 to the lower duct 67 is branched from the upper duct 66 to be blown into each of the cooling gaps 63 to cool the battery cells 61. The cooling gas having cooled the battery cells 61 is collected at and exhausted from the lower duct 67. On the other hand, the cooling gas forcibly blown from the lower duct 67 to the upper duct 66 is branched from the lower duct 67 to be blown into each of the cooling gaps 63 to cool the battery cells 61. The cooling gas having passed through the cooling gaps 63 and cooled the battery cells 61 is collected at and exhausted from the upper duct 66 to the outside.

Further, the battery system with this structure carries the advantage that the cooling gap 64 is provided in the vertical direction of the battery block 63, with the opposite ends of the cooling gap 64 being opened on the top and bottom surfaces of the battery block 63; so when the cooling gas is not forcibly blown into the cooling gap 64, the air in the cooling gap 64 having been heated by the battery cells 61 can be exhausted from the cooling gap 64 to outside, restraining a temperature increase in the battery cells 61. Namely, in this battery system, when the cooling gap 64 is used in common as a vent hole, the heat of the battery cells 61 can be exhausted to outside in an ideal manner.
It should be apparent to those with an ordinary skill in the art that while various preferred embodiments of the invention have been shown and described, it is contemplated that the invention is not limited to the particular embodiments disclosed, which are deemed to be merely illustrative of the inventive concepts and should not be interpreted as limiting the scope of the invention, and which are suitable for all modifications and changes falling within the scope of the invention as defined in the appended claims. The present application is based on Application No. 2007-308091 filed in Japan on November 28, 2007.

## Claims

1. A battery system comprising:
battery cells (1) composed of a plurality of rectangular/prismatic cells;
battery blocks (3) in which cooling gaps (4) are defined between the battery cells (1) to allow a cooling gas to pass therethrough, and the battery cells (1) are layered, wherein the battery blocks (3) are set in two separate arrays;
a forced gas blower (9) for forcibly blowing the gas through the cooling gaps (4) in the battery blocks (3) to cool the battery cells (1); and
an outer casing (20) for covering the battery blocks (3); wherein
an intermediate duct (6) is provided between the battery blocks (3) being set in the two separate arrays, and
an outer duct (7) is provided outside the battery blocks (3) being set in the two separate arrays,
**characterized in that**
the intermediate duct (6) is connected to each of the cooling gaps (4)
the plurality of cooling gaps (4) are connected in a parallel relationship between the outer duct (7) and the intermediate duct (6), and
the forced gas blower (9) is arranged to forcibly blow the cooling gas from the intermediate duct (6) to the outer duct (7), or alternatively forcibly blow the cooling gas from the outer duct (7) to the intermediate duct (6), the cooling gas being forcibly blown is branched from the intermediate duct (6) or from the outer duct (7) to be blown through each of the cooling gaps (4) to cool the battery cells (1), and the cooling gas having passed through the cooling gaps (4) and cooled the battery cells (1) is collected at and exhausted from the outer duct (7) or the intermediate duct (6),
the intermediate duct (6) and/or the outer duct (7) being provided between the outer casing (20) and the battery block (3), and
the outer casing (20) forms at least one ridge (22; 23) protruding outwardly along the intermediate duct (6) and/or the outer duct (7) to broaden a width of the intermediate duct (6) and/or the outer duct (7).

2. The battery system as recited in claim 1, **characterized in that** the battery system is a power source to be used with an electric vehicle.

3. The battery system as recited in claim 1 or 2, **characterized in that** the battery cell is a lithium-ion secondary cell.

4. The battery system as recited in any one of claims 1 through 3, **characterized in that** the battery block has the battery cells layered in an insulated state through a spacer (2) made of an insulating material.

5. The battery system as recited in claim 4, **characterized in that** the spacer (2) has a cooling gap (4) defined with respect to the battery cell (1), the cooling gap allowing the cooling gas to pass therethrough.

6. The battery system as recited in any one of claims 1 through 5, **characterized in that** the battery block (3) is provided with an end plate (10) each on both sides, and such pair of end plates (10) are interconnected by means of a connection member (11) to fix the layered battery cells (1).

7. The battery system as recited in any one of claims 1 through 6, **characterized in that** a cross section of the intermediate duct (6) is set to be two times a cross section of the outer duct (7).

8. The battery system as recited in any one of claims 1 through 7, **characterized in that** a sealing plate (15) for sealing an opening superjacent to the intermediate duct (6) is fixedly attached to a top surface of the battery block (3).

9. The battery system as recited in any one of claims 1 through 8, **characterized in that** an end face plate (30, 50), having connection ducts (31, 32, 51, 52) connected respectively to the intermediate duct (6) and the outer duct (7), is connected to the end face of the battery block (3), with the end face plate (30, 50) being connected to the battery block (3) in an engagement structure.

10. The battery system as recited in claim 9, **characterized in that** a harness storage (35) connected to each of the battery cells (1) is provided on the end face plate (30).

11. The battery system as recited in any one of claims 1 through 10, **characterized in that** the forced gas blower (9) is set to blow the cooling gas in the intermediate duct (6) and the outer duct (7), mutually in parallel and in the reverse direction.

12. The battery system as recited in any one of claims 1 through 10, **characterized in that** the forced gas blower (9) is set to blow the cooling gas in the intermediate duct (6) and the outer duct (7), mutually in parallel and in the same direction.

13. The battery system as recited in any one of claims 1 through 12, **characterized in that** the cross-sectional area of the intermediate duct (6) and/or the outer duct (7) is set by a width of the ridge (22, 23).

## Patentansprüche

1. Batteriesystem, umfassend:
Batteriezellen (1), die aus einer Vielzahl von rechteckigen/prismaförmigen Zellen zusammengesetzt sind;
Batterieblöcke (3), in denen Kühlzwischenräume (4) zwischen den Batteriezellen (1) definiert sind, um ein Kühlgas durchströmen zu lassen, und
die Batteriezellen (1) geschichtet sind, wobei die Batterieblöcke (3) in zwei getrennten Anordnungen angelegt sind;
ein Zwangsgasgebläse (9) zum zwangsweisen Durchblasen des Gases durch die Kühlzwischenräume (4) in den Batterieblöcken (3), um die Batteriezellen (1) zu kühlen; und
ein Außengehäuse (20) zum Abdecken der Batterieblöcke (3); wobei eine Zwischenleitung (6) zwischen den in den zwei getrennten Anordnungen angelegten Batterieblöcken (3) bereitgestellt ist, und
eine Außenleitung (7) außerhalb der in den zwei getrennten Anordnungen angelegten Batterieblöcken (3) bereitgestellt ist,
**dadurch gekennzeichnet dass**
die Zwischenleitung (6) mit jedem der Kühlzwischenräume (4) verbunden ist,
die Vielzahl der Kühlzwischenräume (4) in paralleler Beziehung zwischen der Außenleitung (7) und der Zwischenleitung (6) verbunden sind, und
das Zwangsgasgebläse (9) angeordnet ist, um das Kühlgas zwangsweise von der Zwischenleitung (6) zu der Außenleitung (7) zu blasen, oder alternativ das Kühlgas zwangsweise von der Außenleitung (7) zu der Zwischenleitung (6) zu blasen, wobei das zwangsweise geblasene Kühlgas von der Zwischenleitung (6) oder von der Außenleitung (7) verzweigt wird, um durch jeden der Kühlzwischenräume (4) zur Kühlung der Batteriezellen (1) geblasen zu werden, und wobei das durch die Kühlzwischenräume (4) durchgelassene und die Batteriezellen (1) kühlende Kühlgas an der Außenleitung (7) oder der Zwischenleitung (6) aufgefangen und von dort ausgeblasen wird,
die Zwischenleitung (6) und/oder die Außenleitung (7) zwischen dem Außengehäuse (20) und dem Batterieblock (3) bereitgestellt sind, und
das Außengehäuse (20) mindestens eine nach außen entlang der Zwischenleitung (6) und/oder der Außenleitung (7) hervorragende Kante (22; 23) bildet, um eine Breite der Zwischenleitung (6) und/oder der Außenleitung (7) auszudehnen.

2. Batteriesystem nach Anspruch 1, **dadurch gekennzeichnet, dass** das Batteriesystem eine Stromquelle ist, um in einem Elektrofahrzeug verwendet zu werden.

3. Batteriesystem nach Anspruch 1 oder 2, **dadurch gekennzeichnet, dass** die Batteriezelle eine Lithium-Ionen-Sekundärzelle ist.

4. Batteriesystem nach einem der Ansprüche 1 bis 3, **dadurch gekennzeichnet, dass** die Batteriezellen in dem Batterieblock in einem isolierten Zustand durch einen aus Isoliermaterial hergestellten Abstandhalter (2) geschichtet sind.

5. Batteriesystem nach Anspruch 4, **dadurch gekennzeichnet, dass** der Abstandhalter (2) einen Kühlzwischenraum (4) aufweist, der in Bezug auf die Batteriezelle (1) definiert ist, wobei der Kühlzwischenraum erlaubt, dass das Kühlgas dort hindurchtritt.

6. Batteriesystem nach einem der Ansprüche 1 bis 5, **dadurch gekennzeichnet, dass** der Batterieblock (3) mit einer Endplatte (10) jeweils an beiden Seiten versehen ist, und dadurch dass ein solches Paar Endplatten (10) mittels eines Verbindungsgliedes (11) miteinander verbunden ist, um die geschichteten Batteriezellen (1) zu befestigen.

7. Batteriesystem nach einem der Ansprüche 1 bis 6, **dadurch gekennzeichnet, dass** ein Querschnitt der Zwischenleitung (6) zweimal so groß wie ein Querschnitt der Außenleitung (7) angelegt ist.

8. Batteriesystem nach einem der Ansprüche 1 bis 7, **dadurch gekennzeichnet, dass** eine Abdichtplatte (15) zum Abdichten einer über der Zwischenleitung liegenden (6) Öffnung fest an einer oberen Fläche des Batterieblocks (3) befestigt ist.

9. Batteriesystem nach einem der Ansprüche 1 bis 8, **dadurch gekennzeichnet, dass** eine Endseitenplatte (30, 50) mit Verbindungsleitungen (31, 32, 51, 52), die jeweils mit der Zwischenleitung (6) und der Außenleitung (7) verbunden sind, mit der Endseite des Batterieblocks (3) verbunden ist, wobei die Endseitenplatte (30, 50) in eingreifender Struktur mit dem Batterieblock (3) verbunden ist.

10. Batteriesystem nach Anspruch 9, **dadurch gekennzeichnet, dass** ein mit jeder der Batteriezellen (1) verbundenes Kabelbaumlager (35) an der Endseitenplatte (30) bereitgestellt ist.

11. Batteriesystem nach einem der Ansprüche 1 bis 10, **dadurch gekennzeichnet, dass** das Zwangsgasgebläse (9) dafür angelegt ist, das Kühlgas wechselweise in paralleler und entgegengesetzter Richtung in die Zwischenleitung (6) und in die Außenleitung (7) zu blasen.

12. Batteriesystem nach einem der Ansprüche 1 bis 10, **dadurch gekennzeichnet, dass** das Zwangsgasgebläse (9) dafür angelegt ist, das Kühlgas wechselweise in paralleler und in gleicher Richtung in die Zwischenleitung (6) und in die Außenleitung (7) zu blasen.

13. Batteriesystem nach einem der Ansprüche 1 bis 12, **dadurch gekennzeichnet, dass** die Querschnittsfläche der Zwischenleitung (6) und/oder der Außenleitung (7) durch eine Breite der Kante (22, 23) bestimmt ist.

## Revendications

1. Système de batterie comprenant :
des éléments de batterie (1) composés d'une pluralité d'éléments rectangulaires/prismatiques ;
des blocs de batterie (3) dans lesquels des espaces de refroidissement (4) sont définis entre les éléments de batterie (1) pour permettre à un gaz de refroidissement de passer à travers ceux-ci, et les éléments de batterie (1) sont disposés en couches, dans lequel les blocs de batterie (3) sont placés en deux ensembles séparés ;
un ventilateur de gaz forcé (9) pour souffler de force le gaz à travers les espaces de refroidissement (4) dans les blocs de batterie (3) pour refroidir les éléments de batterie (1) ; et
un boîtier extérieur (20) pour recouvrir les blocs de batterie (3) ; dans lequel
un conduit intermédiaire (6) est prévu entre les blocs de batterie (3) qui sont placés en les deux ensembles séparés, et
un conduit extérieur (7) est prévu à l'extérieur des blocs de batterie (3) qui sont placés en les deux ensembles séparés,
**caractérisé en ce que**
le conduit intermédiaire (6) est relié à chacun des espaces de refroidissement (4),
la pluralité d'espaces de refroidissement (4) sont reliés en parallèle entre le conduit extérieur (7) et le conduit intermédiaire (6), et
le ventilateur de gaz forcé (9) est agencé pour souffler de force le gaz de refroidissement du conduit intermédiaire (6) vers le conduit extérieur (7), ou, en variante, souffler de force le gaz de refroidissement du conduit extérieur (7) vers le conduit intermédiaire (6), le gaz de refroidissement soufflé de force est dérivé du conduit intermédiaire (6) ou du conduit extérieur (7) pour être soufflé à travers chacun des espaces de refroidissement (4) pour refroidir les éléments de batterie (1), et le gaz de refroidissement qui est passé à travers les espaces de refroidissement (4) et qui a refroidi les éléments de batterie (1) est collecté au niveau du conduit extérieur (7) ou du conduit intermédiaire (6) et évacué de celui-ci,
le conduit intermédiaire (6) et/ou le conduit extérieur (7) étant prévus entre le boîtier extérieur (20) et le bloc de batterie (3), et
le boîtier extérieur (20) forme au moins une arête (22 ; 23) faisant saillie à l'extérieur le long du conduit intermédiaire (6) et/ou du conduit extérieur (7) pour augmenter une largeur du conduit intermédiaire (6) et/ou du conduit extérieur (7).

2. Système de batterie selon la revendication 1, **caractérisé en ce que** le système de batterie est une source d'alimentation destinée à être utilisée avec un véhicule électrique.

3. Système de batterie selon la revendication 1 ou 2, **caractérisé en ce que** l'élément de batterie est un élément secondaire au lithium.

4. Système de batterie selon l'une quelconque des revendications 1 à 3, **caractérisé en ce que** le bloc de batterie comporte les éléments de batterie disposés en couches dans un état isolé par l'intermédiaire d'un élément d'espacement (2) constitué d'un matériau isolant.

5. Système de batterie selon la revendication 4, **caractérisé en ce que** l'élément d'espacement (2) comporte un espace de refroidissement (4) défini par rapport à l'élément de batterie (1), l'espace de refroidissement permettant au gaz de refroidissement de passer à travers celui-ci.

6. Système de batterie selon l'une quelconque des revendications 1 à 5, **caractérisé en ce que** le bloc de batterie (3) est pourvu d'une plaque d'extrémité (10) des deux côtés, et ces deux plaques d'extrémité (10) sont reliées l'une à l'autre au moyen d'un élément de liaison (11) pour fixer les éléments de batterie (1) disposés en couches.

7. Système de batterie selon l'une quelconque des revendications 1 à 6, **caractérisé en ce qu'**une section transversale du conduit intermédiaire (6) est définie de manière à être égale à deux fois une section transversale du conduit extérieur (7).

8. Système de batterie selon l'une quelconque des revendications 1 à 7, **caractérisé en ce qu'**une plaque d'étanchéité (15) pour fermer hermétiquement une ouverture sus-jacente au conduit intermédiaire (6) est fixée fermement à une surface supérieure du bloc de batterie (3).

9. Système de batterie selon l'une quelconque des revendications 1 à 8, **caractérisé en ce qu'**une plaque de face d'extrémité (30, 50), ayant des conduits de raccordement (31, 32, 51, 52) respectivement raccordés au conduit intermédiaire (6) et au conduit extérieur (7), est reliée à la face d'extrémité du bloc de batterie (3), la plaque de face d'extrémité (30, 50) étant reliée au bloc de batterie (3) dans une structure de mise en prise.

10. Système de ' batterie selon la revendication 9, **caractérisé en ce qu'**un rangement de faisceau (35) relié à chacun des éléments de batterie (1) est prévu sur la plaque de face d'extrémité (30).

11. Système de batterie selon l'une quelconque des revendications 1 à 10, **caractérisé en ce que** le ventilateur de gaz forcé (9) est placé pour souffler le gaz de refroidissement dans le conduit intermédiaire (6) et le conduit extérieur (7), mutuellement en parallèle et dans la direction inverse.

12. Système de batterie selon l'une quelconque des revendications 1 à 10, **caractérisé en ce que** le ventilateur de gaz forcé (9) est placé pour souffler le gaz de refroidissement dans le conduit intermédiaire (6) et le conduit extérieur (7), mutuellement en parallèle et dans la même direction.

13. Système de batterie selon l'une quelconque des revendications 1 à 12, **caractérisé en ce que** la section transversale du conduit intermédiaire (6) et/ou du conduit extérieur (7) est définie par une largeur de l'arête (22, 23).
